# EUROPÄISCHE PATENTSCHRIFT

(11) **EP 0 472 812 B1**
(45) Veröffentlichungstag und Bekanntmachung des Hinweises auf die Patenterteilung: **06.05.1998**
(21) Anmeldenummer: 91107079.5
(22) Anmeldetag: 02.05.1991
(51) Int. Cl.: G06F 9/44, G06F 9/45

(54) **Verfahren zum Aendern einer in einem Computer eines Gerätes abgespeicherten Maschinensprachenfassung eines ersten Programms in eine Maschinensprachenfassung eines durch mindestens eine Aenderung vom ersten Programm abgeleiteten zweiten Programms**
Method to change an object code version of a first program stored in the computer of an appliance into an object code version of a second program which was derived by at least one change to the first program
Méthode pour changer une version du code objet d'un premier programme mémorisé dans le calculateur d'un dispositif en une version du code objet d'un deuxième programme qui a été dérivé par au moins un changement du premier programme

(30) Priorität: 28.08.1990 CH 2793/90
(43) Veröffentlichungstag der Anmeldung: 04.03.1992
(73) Patentinhaber: Landis & Gyr Technology Innovation AG, 6301 Zug (CH)
(72) Erfinder: Wehrli, Herbert, CH-8865 Bilten (CH); Meyer, Mark, CH-6330 Cham (CH)

(56) Entgegenhaltungen:
- EP-A- 194 822
- EP-A- 323 707
- WO-A-83/01847
- US-A- 4 558 413
- SOFTWARE-PRACTICE AND EXPERIENCE, Band 17, Nr. 7, Juli 1987, Seiten 455-467, Chichester, GB; M.K. CROWE: "Dynamic compilation in the UNIX environment"

## Beschreibung

Die Erfindung bezieht sich auf ein Verfahren zum Ändern einer in einem Computer eines Gerätes abgespeicherten Maschinensprachenfassung eines ersten Programms in eine Maschinensprachenfassung eines durch mindestens eine Änderung vom ersten Programm abgeleiteten zweiten Programms gemäss dem Oberbegriff des Anspruchs 1.

Das Verfahren wird zum Verwalten des Änderungsdienstes von in technischen Geräten eingesetzten Computerprogrammen verwendet.

In Geräten und kleinen Systemen grösserer Fernübertragungs-Systemen werden heutzutage oft sehr leistungsfähige Computer eingesetzt, die wegen der Komplexität der von ihnen zu lösenden Aufgabe nicht mehr in einer maschinennahen Sprache, sondern in einer höheren, maschinenunabhängigen Programmiersprache, einer sogenannten Hochsprache ("high level language") programmiert werden, welche eine schnellere und sichere Programmierung, eine bessere Uebertragbarkeit des Programms auf einen anderen Computer und eine bessere Lesbarkeit des Programms gewährleistet.

Die Hochsprache ist z. B. PASCAL, MODULA 2, C, PORTAL, usw. Nachfolgend gilt die Annahme, dass PORTAL die verwendete Hochsprache ist, wobei das Verfahren jedoch auch für die anderen Hochsprachen gültig ist.

Die als fernprogrammierbar angenommenen Geräte sind je mit einem Computer ausgerüstet und über einen oder mehrere Übertragungskanäle mit einer Zentraleinheit verbunden, die allen fernprogrammierbaren Geräten gemeinsam ist. Die Computer sind vorzugsweise Mikrocomputer.

Die in den Computern verwendeten Programme müssen in der Regel im Laufe der Zeit geändert werden, um sie neuen Anforderungen anzupassen, da z. B. für die alten Funktionen neue und bessere Algorithmen gefunden wurden oder den Gerätebenutzern neue, früher nicht vorgesehene Funktionen angeboten werden sollen. Während diese Aenderungen dem Gerätehersteller bei der Installation neuer Geräte in der Regel keine grosse Schwierigkeiten bereiten, stellen sie für die bereits im Einsatz befindliche Geräte in der Regel ein erhebliches Problem dar, da diese wegen ihrer grossen Zahl und wegen den grossen Entfernungen zwischen den Geräten in der Regel nicht vor Ort, sondern fern neu programmiert werden müssen, und dies in der Regel mehrmals während ihrer Lebensdauer.

Die Geräte sind z. B. Telefonkassierstationen eines öffentlichen Telefonnetzes, in denen z. B. bisher verwendete Taxationsverfahren geändert oder neue Dienstleistungen angeboten werden sollen, wie z. B. ein Abhol- oder Zubringerdienst bei Wahl einer Spezial-Nummer. Das öffentliche Telefonnetz beinhaltet in diesem Fall die Gesamtheit aller Uebertragungskanäle, mit denen die Geräte mit einer Telefonzentrale verbunden sind, die dann die erwähnte Zentraleinheit darstellt. Die Aenderungen des Computer-Programms einer Telefonkassierstation hat dann jeweils nach Möglichkeit fern über Telefonleitungen des öffentlichen Telefonnetzes zu erfolgen.

Bekannt ist das sogenannte "Patches"-Verfahren, mit dessen Hilfe in den Speichern der Geräte neue Programmteile zugeladen und/oder bestehende Programmteile überschrieben werden können, indem in der Maschinensprache, d. h. auf der Maschinencode-Ebene, und mit Kenntnis der verwendeten Maschinencode-Adressen, die gewünschten Aenderungen von der Zentraleinheit zu den Geräten fernübertragen und anschliessend dort in deren Speichern nachgeladen werden. Dadurch gehen sehr schnell die Vorteile der Hochsprache-Programmierung verloren, wie z. B. die Qualität, die Unabhängigkeit von der Maschinen-Sprache, der Dokumentationswert, usw..

Der Erfindung liegt die Aufgabe zugrunde, ein Verfahren der eingangs genannten Art zu verwirklichen, in dem der Benutzer keinen Zugriff zu Informationen bezüglich des erzeugten Maschinencodes und der verwendeten Maschinencode-Adressen benötigt und in dem
- einerseits vermieden wird, dass, insbesondere wenn eine grosse Anzahl von Geräten im Einsatz und/oder womöglich zu verschiedenen Zeiten und zu verschiedenen Zwecken von Programmänderungen betroffen sind, der Ueberblick über die verschiedenen, sich im Betrieb befindlichen Programmvarianten verloren geht, und
- anderseits vermieden wird, dass die Aktualität der Programmdokumentation verloren geht, wodurch verheerende Konsequenzen für die Programm-Erweiterungen und Programm-Aenderungen auf dem Niveau der Hochsprache entstehen können.

Die genannte Aufgabe wird erfindungsgemäss durch die im Anspruch 1 angegebenen Merkmale gelöst. Vorteilhafte Ausgestaltungen der Erfindung ergeben sich aus den Unteransprüchen.

Ein Ausführungsbeispiel der Erfindung ist in der Zeichnung dargestellt und wird im folgenden näher beschrieben.

Es zeigen:
- Fig. 1: ein Blockschaltbild einer Übertragungssystems,
- Fig. 2: eine Blockschaltbild einer Computeranordnung,
- Fig. 3: eine schematische Darstellung eines "Compiler/Linker"-Programms,
- Fig. 4: eine schematische Darstellung eines erfindungsgemäss abgeänderten "Compiler/Linker"-Programms,
- Fig. 5: ein Flussdiagramm eines erfindungsgemässen abgeänderten "Compiler/Linker"-Programms,
- Fig. 6: eine Aufteilung einer Quellenfassung eines Programms in Segmente,
- Fig. 7: ein Flussdiagramm eines Komparator/Generator-Programms und
- Fig. 8: eine symbolische Darstellung einer Plazierung von Segmenten.

Gleiche Bezugszahlen bezeichnen in allen Figuren der Zeichnung gleiche Teile.

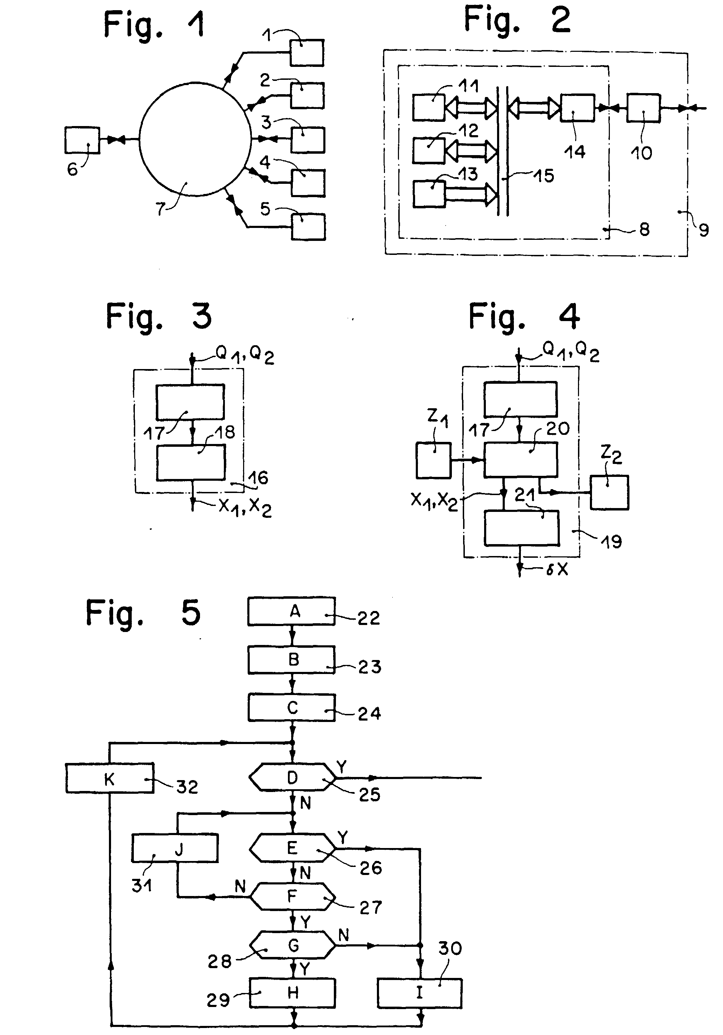

Das in der Fig. 1 dargestellte Übertragungssystem enthält mehrere, z. B. fünf Geräte 1, 2, 3, 4 und 5 sowie eine gemeinsame Zentraleinheit 6, die alle - nah oder fern - räumlich verteilt angeordnet sind. Die Zentraleinheit 6 ist über ein Übertragungsnetz 7 mit den Geräten 1 bis 5 verbunden, welches aus Drahtverbindungen, einem Funk-Netzwerk oder - vorzugsweise - einem Telefonnetz besteht. Übertragungssignale werden zwischen der Zentraleinheit 6 und den Geräten 1 bis 5 in beiden Übertragungsrichtungen übertragen. Falls die Übertragungssignale über grössere Entfernungen übertragen werden müssen, sind sie vorzugsweise modulierte Signale und werden dann als amplituden-, frequenz- oder phasenmodulierte Signale übertragen.

Die Geräte 1 bis 5 sind z. B. moderne Telefonkassier-Stationen, wobei dann die Zentraleinheit 6 eine gemeinsame Telefonzentrale und das Übertragungsnetz 7 ein Telefonnetz ist.

Die Geräte 1 bis 5 sowie die Zentraleinheit 6 enthalten je einen Computer 8, der jeweils in einer Computeranordnung 9 enthalten ist, deren prinzipieller Aufbau in der Fig. 2 vereinfacht dargestellt ist für den Fall, dass die Übertragungssignale modulierte Signale sind. Die Computeranordnung 9 besteht dann aus dem Computer 8 und einem Modem 10 (Modulator/Demodulator), welche in der angegebenen Reihenfolge in Kaskade geschaltet sind, wobei ein nicht mit dem Computer 8 verbundener erster Anschluss des Modems 10 einen Eingang/Ausgang der Computeranordnung 9 bildet und - nicht dargestellt- mit dem Übertragungsnetz 7 verbunden ist.

Der Computer 8 enthält seinerseits einen Zentralprozessor 11 (CPU: Central Processor Unit), einen Schreib/Lese-Speicher 12, einen Festwertspeicher 13 und einen Serie/Parallel-Wandler 14, die alle über Busverbindungen 15 miteinander verbunden sind. Der Schreib/Lese-Speicher 12 ist z. B. ein RAM (Random Access Memory) oder ein EEPROM (Electrically Erasable Programmable Read Only Memory), während der Festwertspeicher 13 z. B. ein ROM (Read Only Memory) oder ein PROM (Programmable Read Only Memory) ist. Mit Ausnahme des Busanschlusses des Festwertspeichers 13 werden alle Busverbindungen 15 in beiden Übertragungsrichtungen betrieben, während der Busanschluss des Festwertspeichers 13 nur in eine vom Festwertspeicher 13 wegweisende Übertragungsrichtung betrieben wird. Ein serieller Eingang/Ausgang des Serie/Parallel-Wandlers 14 bildet einen seriellen Eingang/Ausgang des Computers 8 und ist zwecks Bildung der Kaskadenschaltung mit einem zweiten Anschluss des Modems 10 verbunden, während ein Parallel-Eingang/Ausgang des Serie/Parallel-Wandlers 14 an die Busverbindungen 15 angeschlossen ist. Im Gegensatz zum beschriebenen Beispiel kann die Schnittstelle zwischen der Zentraleinheit 6 und den Geräten 1 bis 5 auch, vor allem bei relativ kurzen Übertragungsentfernungen, eine Parallel-Schnittstelle sein.

Im Computer 8 eines jeden Gerätes 1 bis 5 ist eine Maschinensprachenfassung X₁ eines ersten Programms Y₁ abgespeichert, welche mittels des erfindungsgemässen Verfahrens von der Zentraleinheit 6 aus in eine Maschinensprachenfassung X₂ eines abgeänderten zweiten Programm Y₂ umzuformen ist. Die beiden Maschinensprachenfassungen X₁ und X₂ sind in einer gleichen Maschinensprache abgefasst und ihnen entspricht jeweils im Computer 8 der Zentraleinheit 6 ein zugehöriges erstes beziehungsweise zweites Quellenprogramm Q₁ bzw. Q₂. Die beiden Quellenprogramme Q₁ und Q₂ sind in einer gleichen Hochsprache abgefasst und werden jeweils zu unterschiedlichen Zeitpunkten im Computer 8 der Zentraleinheit 6 mittels eines "Compiler/Linker-Programms" desselben in die Maschinensprachenfassung X₁ bzw. X₂ des zugehörigen ersten beziehungsweise zweiten Programms Y₁ bzw. Y₂ umgewandelt. Das erste Programm Y₁ wird auch oft Vater-Programm und das zweite Programm Y₂ auch oft Sohn-Programm genannt.

Zu Beginn, bei der Installation der Zentraleinheit 6 und gewisser Geräte der Geräte 1 bis 5, ist ein als Basis-Programm Y₀ bezeichnetes Vater-Programm gültig, dessen Maschinensprachenfassung X₀ im Computer 8 der Zentraleinheit 6 unverlierbar gespeichert ist. Eine Kopie der Maschinensprachenfassung X₀ des Bais-Programms Y₀ ist ihrerseits unverlierbar im Computer 8 der betreffenden Geräte gespeichert.

Kurz nach einer ersten Betriebaufnahme wird die Maschinensprachenfassung X₀ des Basis-Programms Y₀ in den Schreib/Lese-Speicher 12 der Zentraleinheit 6 und der gleichzeitig installierten Geräte übernommen und stellt dort eine Art erstes Vater-Programm dar. Im Laufe der Zeit werden neue zusätzliche Geräte installiert, die ein gleiches oder ein anderes Basis-Programm besitzen. Das andere Basis-Programm ist dabei in der Regel ein vom zuerst installierten Basis-Programm Y₀ mittels Änderungen abgeleitetes Programm und ist eine Kopie der Maschinensprachenfassung eines entsprechenden, im Computer 8 der Zentraleinheit 6 abgespeicherten Vater- bzw. Sohn-Programms. Das gleiche oder andere Basis-Programm der zusätzlich installierten Geräte stellt für diese dann jeweils eine Art erstes Vater-Programm dar.

Im Laufe der Zeit können die Vater-Programme Y₁ der diversen Geräte 1 bis 5 von der Zentraleinheit 6 aus zu verschiedenen Zeitpunkten geändert werden. Die Vater-Programme Y₁ werden dann durch für die verschiedenen Geräte 1 bis 5 unterschiedliche Sohn-Programme ersetzt, die alle vom ursprünglichen Basis-Programm Y₀ direkt oder auf Umwege über verschiedene Vater-Programme abgeleitet sind und für jedes Gerät ganze Änderungsketten darstellen können. In einer solchen Änderungskette werden die zeitlich aufeinanderfolgenden Programme der Änderungskette oft als Vater-, Sohn-, Enkel- und Urenkel-Programme bezeichnet.

Dabei ist jedes Programm der Änderungskette jeweils ein Sohn-Programm irgendeines vorgängigen Programms, welches dann dessen Vater-Programm darstellt, während das Basis-Programm Y₀ eine Art Urvater-Programm des Übermittlungssystems darstellt.

### Beispiele:

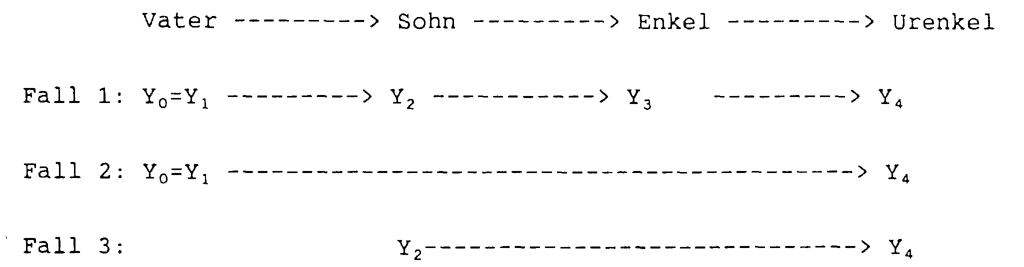

In den Fällen 1 und 2 ist das Vaterprogramm Y₁ jeweils gleich dem Basis-Programm Y₀ und stellt dort jeweils ein erstes Vater-programm dar, während im Fall 3 das Sohn-Programm Y₂ ein erstes Vaterprogramm darstellt, welches auf irgendeine nicht dargestellte Art vom Basis-Programm Y₀ abgeleitet wurde.

Im Fall 1 wird im Laufe der Zeit die ganze Änderungskette schrittweise durchlaufen und aus dem Vaterprogramm Y₁ zuerst das Sohn-Programm Y₂ erzeugt, dann aus dem letzteren ein Enkel-Programm Y₃ generiert und schliesslich aus dem Enkel-Programm Y₃ ein Urenkel-Programm Y₄ erzeugt, wobei jeweils ein Vorgänger-Programm Y₁, Y₂ oder Y₃ ein Vater-Programm für das unmittelbar nachfolgende Programm Y₂, Y₃ bzw. Y₄ darstellt, welches dann ein Sohn-Programm des Vorgänger-Programms Y₁, Y₂ bzw. Y₃ ist.

Im Fall 2 wird die ganze Änderungskette in einem Schritt durchlaufen und direkt aus dem Vater-Programm Y₁ das Urenkel-Programm Y₄ erzeugt.

Der Fall 3 gehört zu einem später installierten Gerät, dessen Basis-Programm bereits das Sohn-Programm Y₂ ist, aus dem dann in einem einzigen Schritt, unter Überspringung des Enkel-Programms Y₃, das Urenkel-Programm Y₄ erzeugt wird.

Obwohl schliesslich in allen Geräten am Ende ein Urenkel-Programm Y₄ abgespeichert ist, bedeutet dies nicht, dass die Urenkel-Programme Y₄ aller Geräte identisch sind, da deren Zusammensetzung von der Entstehungsgeschichte und die Anzahl Zwischenschritte der Änderungskette abhängig ist. Die verschiedenen Geräte 1 bis 5 führen in diesem Fall trotzdem eine gleiche Nutzfunktion aus, da alle Urenkel-Programme Y₄ der Geräte 1 bis 5 ein gleiches Ergebnis ergeben.

Zusammengefasst kann festgestellt werden, dass alle Programme Y₁, Y₂, Y₃ und Y₄ der Änderungskette, soweit sie nicht identisch sind mit dem Basis-Programm Y₀, irgend einmal in ihrem Leben ein Sohn-Programm waren, so dass sie alle, inklusive die entsprechenden Vater-Programme Y₁, in der "Software" des Computers 8 der Zentraleinheit 6 wie ein Sohn-Programm behandelt werden können. Nachfolgend wird das Vater-Programm Y₁ wieder erstes und das Sohn-Programm Y₂ wieder zweites Programm genannt.

Für die "Software"-Entwicklung auf einem üblichen Computer hat ein Entwickler in der Regel ein "Compiler/Linker"-Programm 16, welches z. B. ein in der Fig. 3 dargestelltes Zweipass-"Compiler"-Programm ist und aus einem eigentlichen "Compiler"-Programm 17 und einem diesem nachgeordneten "Linker"-Programm 18 besteht. Dabei ist ein Ausgang des eigentlichen "Compiler"-Programms 17 auf einen Eingang des "Linker"-Programms 18 geführt.

Bekanntlich ist ein "Compiler"-Programm ein Programm, welches die in einer problemorientierten Hochsprache abgefassten Quellenanweisungen eines Quellenprogramms Q in Zielanweisungen einer maschinenorientierten Programmiersprache übersetzt, und ein "Linker"-Programm ein Programm, welches der Erzeugung einer ladbaren Form X eines Computer-Programms dient und die durch das "Compiler"-Programm unabhängig voneinander übersetzten Programmteile miteinander verknüpft.

Zur Durchführung des erfindungsgemässen Verfahrens wurde das an sich bekannte und in der Fig. 3 dargestellte "Compiler/Linker"-Programm 16 für den Computer 8 der Zentraleinheit 6 abgeändert in ein "Compiler/Linker"-Programm 19, welches in der Fig. 4 dargestellt ist. Das "Compiler/Linker"-Programm 19 besteht aus dem eigentlichen "Compiler"-Programm 17, einem diesem nachgeordneten abgeänderten "Linker"-Programm 20 sowie einem dem letzteren nachgeordneten Komparator/Generator-Programm 21. Dabei ist der Ausgang des eigentlichen "Compiler"-Programms 17 auf einen ersten Eingang und ein Ausgang einer ersten Zwischendatei Z₁ auf einen zweiten Eingang des abgeänderten "Linker"-Programms 20 geführt, dessen erster Ausgang auf einen Eingang des Komparator/Generator-Programms 21 und dessen zweiter Ausgang auf einen Eingang einer zweiten Zwischendatei Z₂ geführt ist.

Die Quellenfassung Q₁ bzw. Q₂ des ersten Programms Y₁ bzw. des zweiten Programms Y₂ wird jeweils zum Zeitpunkt seiner Umwandlung in die zugehörige Maschinensprachenfassung X₁ bzw. X₂ einem Eingang des "Compiler"-Programms 17 des "Compiler/Linker"-Programms 16 bzw. 19 zugeführt, während die entsprechende Maschinensprachenfassung X₁ bzw. X₂ jeweils am Ausgang des "Linker"-Programms 18 bzw. am ersten Ausgang des "Linker"-Programms 20 erscheint. Die beiden Quellenfassungen Q₁ und Q₂ sowie die beiden Maschinensprachenfassungen X₁ und X₂ werden dabei jeweils im Schreib/Lese-Speicher 12 des Computers 8 der Zentraleinheit 6 gespeichert.

Beim erfindungsgemässen Verfahren werden jeweils anlässlich der Umwandlung der Quellenfassung Q₂ des zweiten Programms Y₂ in die zugehörige Maschinensprachenfassung X₂ die beiden am ersten Ausgang des abgeänderten "Linker"-Programms 20 erscheinenden Maschinensprachenfassungen X₁ und X₂ dem Komparator/Generator-Programm 21 zugeführt, der dann aus den beiden Maschinensprachenfassungen X₁ und X₂ ein Unterschiedlichkeiten-Programm δX erzeugt, dessen Bytes im Schreib/Lese-Speicher 12 des Computers 8 der Zentraleinheit 6 unter ihren zugeordneten Adressen abgespeichert werden. Ein Unterschiedlichkeiten-Programm δX wird bei jeder Kompilation eines geänderten Programms Y₂ erzeugt und in einem File abgelegt.

Die Bytes des Unterschiedlichkeiten-Programms δX werden anschliessend mittels des vorhandenen Übertragungsverfahrens von der Zentraleinheit 6 zu den Geräten 1 bis 5 übertragen. Zum Beispiel, wenn die Bits der Bytes des Unterschiedlichkeiten-Programms δX parallel anstehen, dann werden diese anschliessend mittels des Serie/Parallel-Wandlers 14 des Computers 8 der Zentraleinheit 6 (siehe Fig. 2) in zeitserielle Bits umgewandelt und - ggf. nach ihrer Modulation im Modem 10 der Zentraleinheit 6 - bitweise zeitseriell zum Gerät 1, 2, 3, 4 oder 5 übertragen. In der Computeranordnung 9 des betreffenden Gerätes werden dann die empfangenen zeitseriellen Bits - ggf. nach ihrer Demodulation im Modem 10 des Gerätes - mittels des Serie/Parallel-Wandlers 14 des Gerätes wieder in parallele Bits umgewandelt. Die empfangenen Bytes werden dann schliesslich im Schreib/Lese-Speicher 12 des Gerätes 1 unter einer dem Byte zugehörigen und mitübertragenen Adresse abgespeichert. Die so im Computer 8 des Gerätes abgespeicherten Bytes des Unterschiedlichkeiten-Programms δX bilden zusammen mit den bereits dort vorhandenen, nicht geänderten abgespeicherten Bytes der Maschinensprachenfassung X₁ des ersten Programms Y₁ des Gerätes dessen Maschinensprachenfassung X₂ des zweiten Programms Y₂, welches aufgabengemäss von der Zentraleinheit 6 aus zu generieren war.

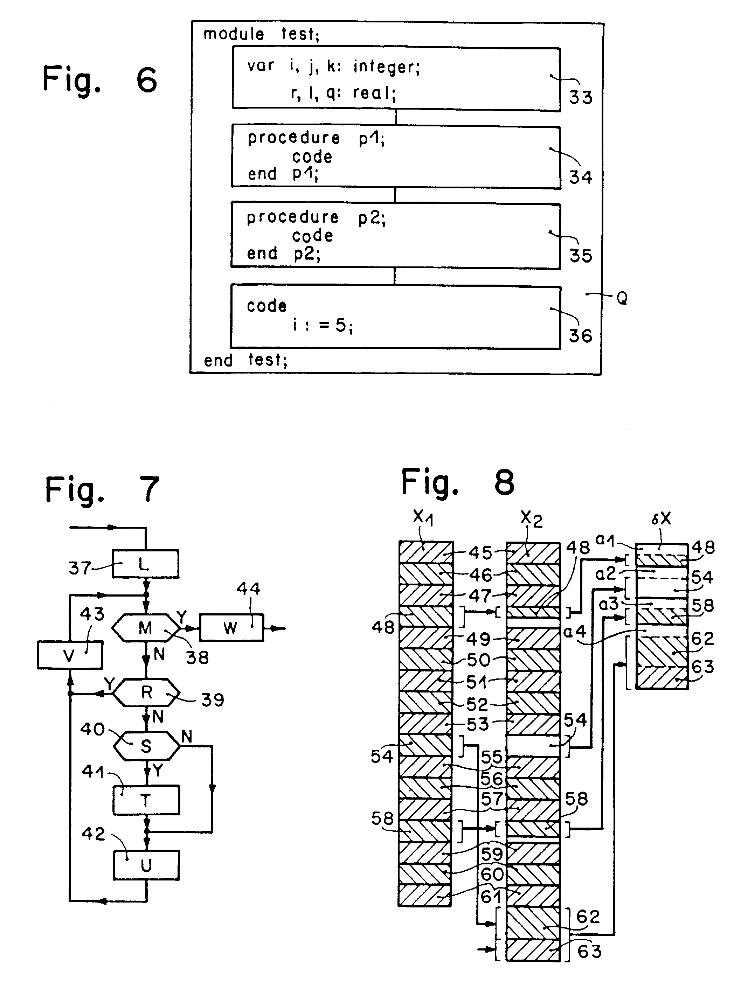

Das aus dem "Compiler"-Programm 17 und dem "Linker"-Programm 20 bestehende Programm führt jeweils zum Zeitpunkt der Umwandlung der Quellenfassung Q₂ des zweiten Programms Y₂ in die zugehörige Machinensprachenfassung X₂ des Zweiten Programms Y₂ zeitlich nacheinander folgende Arbeitsabläufe durch, die in Fig. 5 in Gestalt eines Flussdiagramms symbolisch dargestellt sind.

Das in der Fig. 5 dargestellte Flussdiagramm enthält drei Funktionsblöcke 22, 23 und 24, vier Entscheidungsblöcke 25, 26 27 und 28 sowie einen Funktionsblock 29, die alle in der angegebenen Reihenfolge in Kaskade geschaltet sind und in der angegebenen Reihenfolge Funktionen oder Entscheidungen ausführen, welche in der Fig. 5 durch die Buchstaben A, B, C, D, E, F, G und H dargestellt sind. Zusätzlich sind im Flussdiagramm noch die drei Funktionsblöcke 30, 31 und 32 vorhanden, die in der angegebenen Reihenfolge je eine Funktion ausführen, die in der Fig. 5 durch einen Buchstaben I, J bzw. K dargestellt ist. Die Ja-Ausgänge der Entscheidungsblöcke 25 bis 28 sind jeweils mit Y (Yes) und die Nein-Ausgänge mit N (No) bezeichnet.

Ein Ausgang des Funktionsblocks 22 ist auf einen Eingang des Funktionsblocks 23 geführt, dessen Ausgang mit einem Eingang des Funktionsblocks 24 verbunden ist. Der Ausgang des Funktionsblocks 24 ist auf ein Eingang des Entscheidungsblocks 25 geführt, dessen Ja-Ausgang Y einen Ausgang des Flussdiagramms bildet. Der Nein-Ausgang N des Entscheidungsblocks 25 ist mit einem Eingang des Entscheidungsblocks 26 verbunden, dessen Nein-Ausgang N seinerseits auf einen Eingang des Entscheidungsblocks 27 geführt ist, dessen Ja-Ausgang Y wiederum mit einem Eingang des Entscheidungsblocks 28 verbunden ist. Der Ja-Ausgang Y des letzteren ist seinerseits auf einen Eingang des Funktionsblocks 29 geführt. Der Nein-Ausgang N des Entscheidungsblocks 27 ist mit einem Eingang des Funktionsblocks 31 verbunden, dessen Ausgang auf den Eingang des Entscheidungsblocks 26 geführt ist. Der Ja-Ausgang Y des Entscheidungsblocks 26 und der Nein-Ausgang N des Entscheidungsblocks 28 sind miteinander und mit einem Eingang des Funktionsblocks 30 verbunden, dessen Ausgang sowie ein Ausgang des Funktionsblocks 29 ebenfalls miteinander verbunden sind und auf den Eingang des Funktionsblocks 32 geführt sind, dessen Ausgang mit dem Eingang des Entscheidungsblocks 25 verbunden ist.

Die Buchstaben A bis K haben in der Fig. 5 jeweils folgende Bedeutung:
- A:: Aufbereiten der Quellenfassung Q₁ bzw. Q₂ des anstehenden Programms Y₁ bzw. Y₂.
- B:: Lesen des Inhaltes der Zwischendatei Z₁.
- C:: Wähle das erste Segment des ersten Programms Y₁ als anstehendes Segment des ersten Programms Y₁ und das erste Segment des zweiten Programms Y₂ als anstehendes Segment des zweiten Programms Y₂.
- D:: Sind alle Segmente des zweiten Programms Y₂ geprüft worden?
- E:: Sind alle Segmente des ersten Programms Y₁ geprüft worden?
- F:: Ist der Name des anstehenden Segmentes des zweiten Programms Y₂ identisch mit dem Namen des Segmentes des ersten Programms Y₁?
- G:: Ist der durch das anstehende Segment des zweiten Programms Y₂ benötigte Speicherbedarf kleiner oder gleich als derjenige der durch das zugehörige anstehende Segment des ersten Programms Y₁ benötigt wird?
- H:: Plaziere das anstehende Segment des zweiten Programms Y₂ am gleichen Speicherort wie das zugehörige Segment des ersten Programms Y₁.
- I:: Plaziere das anstehende Segment des zweiten Programms Y₂ an einem freien Speicherort unter Freigabe des Speicherortes, an dem im ersten Programm Y₁ das zugehörige anstehende Segment des ersten Programms Y₁ gespeichert war, und unter anschliessender Korrektur in den anderen Segmenten des zweiten Programms Y₂ der Referenzangaben bezüglich des anstehenden Segmentes des Programms 2.
- J:: Wähle das nächste Segment des ersten Programms Y₁.
- K:: Wähle das nächste Segment des zweiten Programms Y₂.

Das Aufbereiten der anstehenden Quellenfassung im Funktionsblock 22 gemäss A beinhaltet dabei folgende Verfahrensschritte:
a) Das "Compiler"-Programm 17 des "Compiler/Linker"-Programms 19 teilt die Quellenfassung Q₁ bzw. Q₂ des anstehenden Programms Y₁ bzw. Y₂ in Segmente auf, die einen direkten Zusammenhang mit dem Inhalt, wie z. B. Routinen, Moduldatenfelder, usw., des betreffenden Programms Y₁ bzw. Y₂ besitzen und denen je ein Segment in der zugehörigen Maschinensprachenfassung X₁ bzw. X₂ des betreffenden Programms Y₁ bzw. Y₂ entspricht, wobei die Segmente in nachfolgenden "Compiler"-Durchläufen jeweils eine unteilbare Einheit bilden.
   In der Fig. 6 ist ein Beispiel einer Aufteilung einer Quellenfassung Q eines kleinen Programms in Segmente dargestellt, welches keine praktische Bedeutung hat und nur der Illustration einer Aufteilung einer Quellenfassung in Segmente dient. Die Quellenfassung Q des Programms enthält z. B. nur ein einziges Programm-Modul mit dem Titel "test". Das Programm-Modul "test" beginnt mit einer Formulierung "module test" und endet mit einer Formulierung "end test". Das Programm-Modul "test" und damit die dargestellte Quellenfassung Q des Programms ist in der Darstellung der Fig. 6 in vier Segmente 33, 34, 35 und 36 aufgeteilt, die zur besseren Sichtbarmachung umrahmt dargestellt sind. In der Praxis fehlt diese Umrahmung jedoch normalerweise. Das Segment 33 stellt ein Datensegment des Programm-Moduls "test" dar, in welchem die Werte von Variablen i, j und k als ganzzahlige ("integer") und die Werte der Variablen r, l und q als reale ("real") Zahlen definiert werden. Die Segmente 34 und 35 stellen je ein Codesegment einer Prozedur ("procedure") p₁ bzw. p₂ dar. Das Segment 36 ist ein Codesegment des Programm-Moduls "test", in dem der Variablen i ein Wert 5 zugewiesen wird.
b) Das "Compiler"-Programm 17 des "Compiler/Linker"-Programms 19 ordnet jedem der erwähnten Segmente einen eindeutigen Segmentnamen zu, der für beide Programme Y₁ und Y₂ identisch ist.
   Die Segmente werden mit einem Namen versehen, der einen eindeutigen Zusammenhang mit dem Bezeichner in der Quellenfassung hat, z. B. Name als String, Referenz in der Namenstabelle, Hashcode, usw.
   Ausserdem müssen je nach verwendeter Hochsprache noch zusätzliche Strukturinformationen, wie z. B. Quellenfile, Schachtelungstiefe, usw., dem Segmentname zugefügt werden, da in gewissen Sprachen, wie z. B. PASCAL, für verschiedene Routinen gleiche Namen verwendet werden können.
c) Das "Compiler"-Programm 17 des "Compiler/Linker"-Programms 19 fasst alle Segmente des anstehenden Programms Y₁ bzw. Y₂ in diverse Sektionen zusammen, wie z. B. Routinencodes, Variablen, Konstanten, usw.
   Z. B. enthält die Sektion "CODE" alle Codeteile von Prozeduren, Funktionen und Prozessen, jedoch kein Modul-Code. Desgleichen enthält die Sektion "DATA" alle Variablen der Module.
d) Das "Linker"-Programm 20 des "Compiler/Linker"-Programms 19 plaziert die Sektionen und damit natürlich auch alle in ihnen enthaltenen Segmente anhand einer Spezifikation, z. B. in einem physikalischen Speicher oder in einem bestimmten Speicherbereich des Computers 8 der Zentraleinheit 6.
   Beispiele:
   - Region ROM 8000..FFFF : Physikalischer Speicherbereich
   - Locate ROM CODE ..... : Plaziere die Sektionen CODE ....
      im Speicherbereich ROM
e) Das "Linker"-Programm 20 des "Compiler/Linker"-Programms 19 speichert Segmentinformationen bezüglich der plazierten Segmente des anstehenden ersten beziehungsweise zweiten Programms Y₁ bzw. Y₂ in einer ersten beziehungsweise zweiten Zwischendatei Z₁ bzw. Z₂, welche dann bei nachträglichen Kompilationen eines Sohn-Programms zur Verfügung stehen.
   Die Zwischendateien Z₁ und Z₂ enthalten für jedes Segment in der Regel folgende, für das erfindungsgemässe Verfahren wesentliche Segmentinformationen:
   - ein Segmentname,
   - eine Sektionszugehörigkeit,
   - eine Startadresse des Segmentes im physikalischen Speicher,
   - ein Speicherbedarf des Segmentes in Bytes und
   - eine maximal mögliche Grösse des Segmentes zwecks Lösung von Optimierungsproblemen bei Segmentverschiebungen.

Das "Linker"-Programm 20 des "Compiler/Linker"-Programms 19 liest anschliessend im Funktionsblock 23 gemäss B den Inhalt der Zwischendatei Z₁ des bereits zu einem früheren Zeitpunkt behandelten und aufbereiteten ersten Programms Y₁.

Danach wird im Funktionsblock 24 gemäss C das "Linker"-Programm 20 des "Compiler/Linker"-Programms 19 das erste Segment des ersten Programms Y₁ und das erste Segment des zweiten Programms Y₂ als anstehende Segmente der beiden Programme Y₁ und Y₂ wählen Mit anderen Worten: Der Computer 8 der Zentraleinheit 6 wird anschliessend zuerst einmal die in den Zwischendateien Z₁ und Z₂ gespeicherten Segmentinformationen, insbesondere die Segmentnamen und der Speicherbedarf, des ersten Segmentes der beiden Programme Y₁ und Y₂ behandeln und miteinander vergleichen sowie vom Vergleichsresultat ausgehend das erste Segment des zweiten Programms Y₂ plazieren.

Das "Linker"-Programm 20 stellt im Entscheidungsblock 25 gemäss D zuerst einmal fest, ob bereits alle Segmente des zweiten Programms Y₂ behandelt wurden. Wenn ja, dann ist das "Linker"-Programm 20 beendet und der Computer 8 der Zentraleinheit 6 kann zum nachgeordneten und in der Fig. 5 nicht mehr dargestellten Komparator/Generator-Programm 21 übergehen.

Wenn nein, dann stellt das "Linker"-Programm 20 im Entscheidungsblock 26 gemäss E fest, ob bereits alle Segmente des ersten Programms Y₁ behandelt wurden. Wenn ja, dann ist das anstehende Segment des zweiten Programms Y₂ nicht im ersten Programm vorhanden gewesen, es stellt somit ein neues Segment dar und muss im Funktionsblock 30 gemäss I in einer freien Speicherstelle abgespeichert werden. Wenn nein, dann vergleicht das "Linker"-Programm 20 im Entscheidungsblock 27 gemäss F den Segmentnamen des anstehenden Segmentes des ersten und des zweiten Programms Y₁ und Y₂ auf Identität miteinander.

Bei Nichtidentität beider Segmentnamen geht das "Linker"-Programm 20 zum Funktionsblock 31 und wählt das nächste Segment des ersten Programms Y₁ und vergleicht, falls noch nicht alle Segmente des ersten Programms Y₁ behandelt wurde, dessen Segmentname mit demjenigen des noch immer anstehenden ersten Segmentes des zweiten Programms Y₂. Bei erneuter Nichtidentität wird gemäss Funktionsblock 31 das nächste Segment des ersten Programms Y₁ gewählt und dessen Segmentname mit demjenigen des anstehenden Segmentes des zweiten Programms verglichen. Das geschieht so oft und so lange bis entweder alle Segmente des ersten Programms Y₁ behandelt wurden oder bis die Segmentnamen-Identität vorhanden ist. Im ersten Fall geht das Programm wie bereits erläutert zum Funktionsblock 30 und im zweiten Fall zum Entscheidungsblock 28.

Bei vorhandener Segmentnamen-Identität, klärt das "Linker"-Programm 20 im Entscheidungsblock 28 gemäss G ab, ob der vom anstehenden Segment des zweiten Programms Y₂ benötigte Speicherbedarf gleich oder kleiner ist als derjenige, der vom zugehörigen anstehenden Segment des ersten Programms Y₁ benötigt wird. Wenn ja, dann ist am alten Speicherort genügend Speicherplatz für das Segment des zweiten Programms Y₂ vorhanden und das Segment kann dort plaziert werden, was im Funktionsblock 29 gemäss H auch geschieht. Wenn nein, dann ist am alten Speicherort nicht genügend Speicherplatz für das anstehende Segment vorhanden und dieses muss gemäss I im Funktionsblock 30 in freien Speicherstellen an einem neuen Ort, z. B. am Ende des bisher geltenden Programms Y₁, plaziert werden unter Freigabe des alten Speicherortes. Letzterer steht dann zur freien Verfügung für eine nachfolgende Speicherung geänderter Segmente des zweiten Programms Y₂, wie z. B. neuer Segmente oder Segmente, die einen höheren Speicherbedarf als das entsprechende Segment des ersten Programms Y₁, jedoch einen niedrigeren Speicherbedarf benötigen, als im freigegebenen Speicherort vorhanden ist. Ausserdem werden anschliessend dann noch alle Referenzangaben, die sich in anderen Segmenten auf das betreffende anstehende Segment beziehen, wie z. B. Routinenaufrufe, korrigiert und auf den neuesten Stand gebracht, da dieses Segment ja jetzt eine neue, andere Stelle im Speicher und im Programm einnimmt.

Nach der Plazierung des ersten Segmentes des zweiten Programms Y₂ geht das "Linker"-Programm 20 dann zum Funktionsblock 32 und wählt gemäss K das nächste Segment des zweiten Programms Y₂ zur Behandlung, was auf die gleiche Art geschieht, wie beim ersten Segment.

Auf diese Weise werden mittels des "Linker"-Programms 20 zeitlich nacheinander alle Segmente des zweiten Programms Y₂ behandelt bis zu dem Augenblick, an dem der Entscheidungsblock 25 feststellt, dass alle Segmente des zweiten Programms Y₂ behandelt wurden und das Programm das "Compiler/Linker"-Programm 20 verlässt, um zum Komparator/Generator-Programm 21 über zu gehen (siehe Fig. 4).

Das "Linker"-Programm 20 sucht somit für jedes Segment des zweiten Programms Y₂ alle Segmente des ersten Programms Y₁ auf Segmentnamen-Identität ab und plaziert dann bei vorhandener Segmentnamen-Identität das anstehehende Segment des zweiten Programms Y₂ entsprechend seinem Speicherbedarf. Dabei wird der Inhalt eines jeden Segmentes, der im zweiten Programm Y₂ einen grösseren Speicherbedarf benötigt als im ersten Programm Y₁, unter Freigabe des bisher belegten Speicherbereichs zugunsten des Inhaltes eines oder mehrerer anderer Segmente, in einem freien Speicherbereich des Computers 8 der Zentraleinheit 6 gespeichert, während alle andere Segmente des zweiten Programms Y₂, die im zweiten Programm Y₂ höchstens je einen gleich grossen Speicherbedarf benötigen wie im ersten Programm Y₁, am gleichen Ort gespeichert werden wie das zugehörige Segment des ersten Programms Y₁ im letzteren gespeichert war.

Die so plazierten Segmente des zweiten Programms Y₂ bilden dann zusammen die Maschinensprachenfassung X₂ des anstehenden Programms Y₂, welche somit vom "Linker"-Programm 20 des "Compiler/Linker"-Programms 19 erzeugt wurde, um unter anderem dem Komparator/Generator-Programm 21 zur Verfügung gestellt zu werden.

Der Ausgang des in der Fig. 5 dargestellten Flussdiagramms, d. h. der Ja-Ausgang des Entscheidungsblocks 25, ist auf einen Eingang des in der Fig. 7 dargestellten Flussdiagramms des Komparator/ Generator-Programms 21 geführt, welches aus einem Funktionsblock 37, drei Entscheidungsblöcken 38, 39 und 40 sowie zwei Funktionsblöcken 41 und 42 besteht, die alle in der angegebenen Reihenfolge in Kaskade geschaltet sind und die in der angegebenen Reihenfolge Entscheidungen oder Funktionen ausführen, welche in der Fig. 7 durch die Buchstaben L, M, R, S, T und U dargestellt sind. Zusätzlich sind noch in der Fig. 7 die beiden Funktionsblöcke 43 und 44 vorhanden, die je eine Funktion ausführen, die in der Fig. 7 durch einen Buchstaben V bzw. W dargestellt ist. Die Ja-Ausgänge der Entscheidungsblöcke 38 bis 40 sind jeweils mit Y und die Nein-Ausgänge mit N bezeichnet. Ein Eingang des Funktionsblocks 37 bildet den Eingang des Flussdiagramms des Komparator/Generator-Programms 21, während der Ausgang des letzteren durch einen Ausgang des Funktionsblocks 44 gebildet wird.

Ein Ausgang des Funktionsblocks 37 ist auf einen Eingang des Entscheidungsblocks 38 geführt, dessen Nein-Ausgang N mit einem Eingang des Entscheidungsblocks 39 verbunden ist, dessen Nein-Ausgang N seinerseits auf einen Eingang des Entscheidungsblocks 40 geführt ist, dessen Ja-Ausgang Y wiederum mit einem Eingang des Funktionsblocks 41 verbunden ist. Der Nein-Ausgang N des Entscheidungsblocks 40 und der Ausgang des Funktionsblocks 41 sind miteinander und mit einem Eingang des Funktionsblocks 42 verbunden. Der Ja-Ausgang Y des Entscheidungsblocks 39 und der Ausgang des Funktionsblocks 42 sind miteinander und mit einem Eingang des Funktionsblocks 43 verbunden, dessen Ausgang auf den Eingang des Entscheidungsblocks 38 geführt ist. Der Ja-Ausgang Y des letzteren ist auf einen Eingang des Funktionsblocks 44 geführt.

Die Buchstaben L bis W haben in der Fig. 7 jeweils folgende Bedeutung:
- L:: Lese die Adresse und den Inhalt des ersten Bytes der Maschinensprachenfassung X₂ des zweiten Programms Y₂ sowie den Inhalt des zugehörigen Bytes der Maschinensprachenfassung X₁ des ersten Programms Y₁.
- M:: Sind alle Bytes der Maschinensprachenfassung X₂ des zweiten Programms Y₂ geprüft worden?
- R:: Ist das anstehende Byte der Maschinensprachenfassung X₂ des zweiten Programms Y₂ identisch mit dem zugehörigen Byte der Maschinensprachenfassung X₁ des ersten Programms Y₁?
- S:: Ist die Differenz zwischen der Maschinensprachen-Adresse des anstehenden Bytes des zweiten Programms Y₂ und der Maschinensprachen-Adresse des zuletzt im Unterschiedlichkeiten-Programm δX plazierten Bytes des zweiten Programms Y₂ grösser als Eins?
- T:: Plaziere die Maschinensprachen-Adresse des anstehenden Bytes des zweiten Programms Y₂ in die nächste freie Stelle des Unterschiedlichkeiten-Programms δX.
- U:: Plaziere das anstehende Byte der Maschinensprachenfassung X₂ des zweiten Programms Y₂ in die nächste freie Stelle des Unterschiedlichkeiten-Programms δX und speichere die Adresse, die dieses Byte in der Maschinensprachenfassung X₂ des zweiten Programms Y₂ besitzt, im Schreib/Lese-Speicher 12 des Computers 8 der Zentraleinheit 6 an einer zu diesem Zweck reservierten Stelle.
- V:: Lese die Adresse und den Inhalt des nächsten Bytes der Maschinensprachenfassung X₂ des zweiten Programms Y₂ sowie den Inhalt des zugehörigen Bytes der Maschinensprachenfassung X₁ des ersten Programms Y₁.
- W:: Lese das Unterschiedlichkeiten-Programm δX.

Das Komparator/Generator-Programm 21 behandelt gemäss der Funktionsblöcke 37 und 43 zeitlich nacheinander die Adressen und Inhalte aller Bytes aller Segmente der Maschinensprachenfassung X₂ des zweiten Programms Y₂. Es stellt im Entscheidungsblock 38 gemäss M zuerst einmal fest, ob bereits alle Bytes der Maschinensprachenfassung X₂ des zweiten Programms Y₂ behandelt wurden. Wenn ja, dann ist das Komparator/Generator-Programm 21 an sich beendet und der Inhalt des Unterschiedlichkeiten-Programms δX braucht nur mehr im Funktionsblock 44 gemäss W durch den Computer 8 der Zentraleinheit 6 gelesen und zu einem oder mehreren der Geräte 1 bis 5 übertragen zu werden.

Wenn nein, dann vergleicht das Komparator/Generator-Programm 21 im Entscheidungsblock 39 gemäss R den Inhalt des anstehenden Bytes der Maschinensprachenfassung X₂ des zweiten Programms Y₂ mit dem ebenfalls anstehenden Inhalt des zugehörigen Bytes der Maschinensprachenfassung X₁ des ersten Programms Y₁. Bei einer Identität beider Inhalte geht das Komparator/Generator-Programm 21 zum Funktionsblock 43 und gibt den Auftrag das nächste Byte der Maschinensprachenfassung X₂ des zweiten Programms Y₂ zu behandeln, weil das anstehende Byte unverändert geblieben ist und nicht weiter behandelt werden muss, da es von der bereits in den betroffenen Geräten 1 bis 5 vorhandenen Maschinensprachenfassung X₁ des ersten Programms Y₁ übernommen werden kann und daher nicht Gegenstand des Unterschiedlichkeiten-Programms δX zu sein braucht.

Bei einer nicht vorhandenen Identität beider Inhalte, klärt das Komparator/Generator-Programm 21 anschliessend im Entscheidungsblock 40 gemäss S ab, ob die Differenz zwischen der Adresse des anstehenden Bytes in der Machinensprachen-Fassung X₂ des zweiten Programms Y₂ und der Adresse in der Maschinensprachenfassung X₂ des zweiten Programms Y₂ des zuletzt im Unterschiedlichkeiten-Programm δX plazierten Bytes grösser als Eins ist.
- Wenn ja, dann besitzen zwei aufeinanderfolgend in das Unterschiedlichkeiten-Programm δX plazierte Bytes in der Maschinensprachenfassung X₂ des zweiten Programms Y₂ keine aufeinanderfolgende Adressen und bilden somit dort keinen Programmblock. Es ist somit ein Adressensprung vorhanden, der im Unterschiedlichkeiten-Programm δX dadurch berücksichtigt wird, dass im Funktionsblock 41 gemäss T die Adresse des anstehenden Bytes in die nächste freie Stelle des Unterschiedlichkeiten-Programms δX plaziert wird. Anschliessend wird dann im Funktionsblock 42 gemäss U das anstehende Byte der Maschinensprachenfassung X₂ des zweiten Programms Y₂ an der nächsten freien Stelle in das Unterschiedlichkeiten-Programm δX plaziert.
- Wenn nein, dann besitzen zwei aufeinanderfolgend in das Unterschiedlichkeiten-Programm δX plazierte Bytes in der Maschinensprachenfassung X₂ des zweiten Programms Y₂ aufeinanderfolgende Adressen und bilden somit dort einen Programmblock. Es ist somit kein Adressensprung vorhanden, der im Unterschiedlichkeiten-Programm δX zu berücksichtigen wäre. Der Funktionsblock 41 kann somit übersprungen und im Funktionsblock 42 gemäss U direkt der Inhalt des anstehenden Bytes der Maschinensprachenfassung X₂ des zweiten Programms Y₂ an der nächsten freien Stelle in das Unterschiedlichkeiten-Programm δX plaziert werden.

Nach der Plazierung des anstehenden Bytes der Maschinensprachen-Fassung X₂ des zweiten Programms Y₂ in das Unterschiedlichkeiten-Programm δX geht das Komparator/Generator-Programm 21 zum Funktionsblock 43 und gibt den Auftrag das nächste Byte zu behandeln. Das Komparator/Generator-Programm 21 vergleicht somit alle Bytes aller Segmente der beiden Maschinensprachenfassungen X₁ und X₂ miteinander und erzeugt, vom Vergleichsresultat ausgehend, das Unterschiedlichkeiten-Programm δX, welches nur mehr die für die beiden Maschinensprachenfassungen X₁ und X₂ unterschiedlichen Bytes mit ihnen zugeordneten Adressen enthält, wobei zum Einsparen von Speicherplätzen im Unterschiedlichkeiten-Programm δX und zum Einsparen von Übertragungszeit zwischen der zentralen Steuereinheit 6 und den Geräten 1 bis 5, nur das absolute Minimum dieser Adressen in das Unterschiedlichkeiten-Programm δX übernommen wird. Mit anderen Worten: Aufeinanderfolgende Bytes der Maschinensprachenfassung X₂ werden, falls sie in das Unterschiedlichkeiten-Programm δX übernommen werden, als Programmblock mit einer einzigen Adresse behandelt und ihnen die Adresse ihres ersten Bytes zugeordnet, während nicht aufeinanderfolgende übernommene Bytes der Maschinensprachenfassung X₂ je eine getrennte Adresse beibehalten und mit dieser in das Unterschiedlichkeiten-Programm δX übernommen werden.

Nachdem alle Bytes aller Segmente der Maschinensprachenfassung X₂ geprüft und ggf. in das Unterschiedlichkeiten-Programm δX übernommen, ist letzteres erstellt und abgespeichert. Seine Bytes können dann im Funktionsblock 44 gemäss W gelesen und nach Aufbereitung zu einem oder mehreren der Geräte 1 bis 5 übertragen werden.

In der Fig. 8 sind die Maschinensprachenfassungen X₁ und X₂ der beiden Programme Y₁ und Y₂ sowie das Unterschiedlichkeiten-Programm δX symbolisch wiedergegeben, indem ihre einzelne Segmente jeweils als schraffierte Blöcke untereinander dargestellt sind in einer Reihenfolge, in der sie auch abgespeichert sind. Dabei sind zur besseren Sichtbarmachung aufeinanderfolgende Segmente abwechselnd unterschiedlich schraffiert dargestellt. Nicht schraffierte Blöcke sind in der Maschinensprachenfassung X₂ leer bzw. im Unterschiedlichkeiten-Programm δX leer oder mit einer Adresse a1, a2, a3 oder a4 belegt. Die Machinensprachen-Fassung X₁ des ersten Programms Y₁ besteht aus den Segmenten 45 bis 61, während die Maschinensprachenfassung X₂ des zweiten Programms Y₂ am gleichen Ort wie in der Maschinensprachenfassung X₁ die Segmente 45 bis 53 sowie 55 bis 61 besitzt. Da das Segment 54 von X₁ in X₂ mehr Speicherplatz benötigt als in X₁, wurde sein Speicherplatz 54 in X₂ leer gelassen (siehe weisser Block 54 in X₂) und das geänderte Segment 54 als Segment 62 direkt anschliessend nach dem Segment 61 an einer freien Speicherstelle in X₂ untergebracht. Das Segment 63 von X₂ ist dagegen ein neues Segment, welches in X₁ kein Äquivalent und demnach auch keine Speicherstelle besitzt, und direkt anschliessend nach dem Segment 62 am Ende von X₂ untergebracht. Die abgeänderten Segmente 48 und 58 benötigen in X₂ weniger Speicherplatz als in X₁, so dass sie in X₂ am gleichen Ort wie in X₁ plaziert werden können, der in X₂ jedoch jeweils nur teilweise belegt ist (siehe in X₂ die weissen Blöcke direkt anschliessend an den schraffierten Blöcken 48 und 58). Nachfolgend gilt aus Gründen der zeichnerischen Einfachheit, dass alle Bytes der Segmente 48, 54 und 58 geändert wurden.

Für alle anderen Segmenten 45 bis 47, 49 bis 53, 55 bis 57 und 59 bis 61 gilt die Annahme, dass sie unverändert geblieben sind und sie somit in X₂ vollständig den gleichen Ort belegen wie in X₁. Diese unveränderten Segmente brauchen nicht in das Unterschiedlichkeiten-Programm δX übernommen zu werden und können daher nachfolgend vergessen werden. Die geänderten Segmente 48, 54 und 58 sowie die neuen Segmente 62 und 63 sind in X₂ in der angegebenen Reihenfolge untergebracht, wobei das Segment 54 von X₂ leer ist und das Segment 62 von X₂ dem geänderten Segment 54 von X₁ entspricht. Die geänderten Segmente 48, 54, 58, 62 und 63 von X₂ werden in dieser Reihenfolge auch in das Unterschiedlichkeiten-Programm δX übernommen, wobei die Segmente 62 und 63, da aufeinanderfolgend, im Unterschiedlichkeiten-Programm δX einen Block bilden, der nur eine einzige Adresse a4 benötigt. Die drei Segmente 48, 54 und 58 sowie der Segmentblock 62;63 sind in X₂ durch andere Segmente voneinander getrennt und benötigen daher im Unterschiedlichkeiten-Programm δX je eine Adresse a1, a2, a3 bzw. a4. Das Unterschiedlichkeiten-Programm δX besteht dann in der angegebenen Reihenfolge aus den Blöcken a1, 48, a2, 54, a3, 58, a4, 62, 63.

## Patentansprüche

1. Verfahren zum Ändern einer in einem Computer (8) eines Gerätes (1, 2, 3, 4 oder 5) abgespeicherten Maschinensprachenfassung (X₁) eines ersten Programms (Y₁) in eine Maschinensprachenfassung (X₂) eines durch mindestens eine Änderung vom ersten Programm (Y₁) abgeleiteten zweiten Programms (Y₂), wobei jeweils zu unterschiedlichen Zeitpunkten eine zugehörige erste beziehungsweise zweite Quellenfassung (Q₁ bzw. Q₂) der beiden Programme (Y₁, Y₂) in einem Computer (8) einer Zentraleinheit (6) mittels eines "Compiler/Linker"-Programms (19) in die zugehörige erste beziehungsweise zweite Maschinensprachenfassung (X₁ bzw. X₂) umgewandelt wird,
dadurch gekennzeichnet,
- dass jeweils zum Zeitpunkt der Umwandlung einer Quellenfassung (Q1 bzw. Q₂) in die zugehörige Machinensprachenfassung (X₁ bzw. X₂) im Computer (8) der Zentraleinheit (6)
- ein "Compiler"-Programm (17) des "Compiler/Linker"-Programms (19) die betreffende Quellenfassung (Q₁ bzw. Q₂) in Segmente aufteilt, die einen direkten Zusammenhang mit dem Inhalt der Quellenfassung (Q₁ bzw. Q₂) besitzen und denen je ein Segment in der zugehörigen Maschinensprachenfassung (X₁ bzw. X₂) entspricht, wobei die Segmente in nachfolgenden "Compiler"-Durchläufen jeweils eine unteilbare Einheit bilden,
- ein "Linker"-Programm (20) des "Compiler/Linker"-Programms (19) Segmentinformationen bezüglich der Segmente des betreffenden Programms (Y₁ bzw. Y₂) in einer Zwischendatei (Z₁ bzw. Z₂) speichert, und
- dass das "Linker"-Programm (20) während der Umwandlung der Quellenfassung (Q₂) des zweiten Programms (Y₂) in dessen Maschinensprachenfassung (X₂)
- die in einer ersten Zwischendatei (Z₁) gespeicherten Segmentinformationen des ersten Programms (Y₁) liest und mit den in einer zweiten Zwischendatei (Z₂) gespeicherten Segmentinformationen des zweiten Programms (Y₂) vergleicht,
- den Inhalt eines jeden Segmentes, der in der Maschinensprachenfassung (X₂) des zweiten Programms (Y₂) höchstens einen gleich grossen Speicherbedarf benötigt wie in derjenigen des ersten Programms (Y₁), in beiden Maschinensprachenfassungen (X₁, X₂) unter je einer gleichen Adresse im Computer (8) der Zentraleinheit (6) abspeichert, und
- den Inhalt eines jeden Segmentes, der in der Maschinensprachenfassung (X₂) des zweiten Programms (Y₂) einen grösseren Speicherbedarf benötigt als in derjenigen des ersten Programms (Y₁),
- unter Freigabe des bisher belegten Speicherbereichs zugunsten des Inhaltes eines oder mehrerer anderer Segmente, in einem freien Speicherbereich des Computers (8) der Zentraleinheit (6) speichert sowie
- Referenzangaben, die sich in anderen Segmenten auf das betreffende Segment beziehen, korrigiert und auf den neuesten Stand bringt,
- dass dem "Linker"-Programm (20) ein Komparator/Generator-Programm (21) nachgeordnet ist, welches
- alle Bytes der beiden Maschinensprachenfassungen (X₁, X₂) miteinander vergleicht und
- ein Unterschiedlichkeiten-Programm (δX) erzeugt, welches nur mehr die für die beiden Maschinensprachenfassungen (X₁, X₂) unterschiedlichen Bytes mit ihnen zugeordneten Adressen (a1, a2, a3, a4) enthält, und
- dass das Unterschiedlichkeiten-Programm (δX) dem Computer (8) des Gerätes (1, 2, 3, 4 oder 5) zugeleitet wird und seine Bytes dort unter ihren zugeordneten Adressen (a1, a2, a3, a4) abgespeichert werden, wobei sie zusammen mit den bereits vorhandenen, nicht geänderten Bytes der Maschinensprachenfassung (X₁) des ersten Programms (Y₁) des Gerätes (1, 2, 3, 4 oder 5) dessen Maschinensprachenfassung (X₂) des zweiten Programms (Y₂) bilden.

2. Verfahren nach Anspruch 1, dadurch gekennzeichnet, dass das "Compiler"-Programm (17) jedem der Segmente einen eindeutigen Segmentnamen zuordnet, der für beide Programme (Y₁, Y₂) identisch ist.

3. Verfahren nach Anspruch 1 oder 2, dadurch gekennzeichnet, dass die Segmentinformationen jeweils mindestens einen Segmentnamen, eine Startadresse des Segmentes im physikalischen Speicher, einen Speicherbedarf des Segmentes und eine maximal mögliche Grösse des Segmentes beinhalten.

4. Verfahren nach einem der Ansprüche 1 bis 3, dadurch gekennzeichnet, dass das "Compiler"-Programm (17) alle Segmente des anstehenden Programms (Y₁ bzw. Y₂) in Sektionen zusammenfasst und dass das "Linker"-Programm (20) im Computer (8) der Zentraleinheit (6) die Sektionen anhand einer Spezifikation in einem Speicherbereich plaziert.

5. Verfahren nach Anspruch 4, dadurch gekennzeichnet, dass die Segmentinformationen jeweils eine Sektionszugehörigkeit des Segments beinhalten.

## Claims

1. A method of changing a machine language version (X₁) of a first program (Y₁) which is stored in a computer (8) of an apparatus (1, 2, 3, 4 or 5) into a machine language version (X₂) of a second program of a second program (Y₂) which is derived from the first program (Y₁) by at least one change, wherein at respective different moments in time associated first and second source versions (Q₁ and Q₂ respectively) of the two programs (Y₁, Y₂) are converted in a computer (8) of a central unit (6) by means of a compiler/linker-program (19) into the associated first and second machine language versions (X₁ and X₂ respectively),
characterised in that
- at the respective moment in time of conversion of a source version (Q₁ and Q₂) into the associated machine language version (X₁ and X₂) in the computer (8) of the central unit (6)
- a compiler-program (17) of the compiler/linker-program (19) divides the source version (Q₁ and Q₂ respectively) in question into segments which have a direct relationship with the content of the source version (Q₁ and Q₂ respectively) and to which there corresponds a respective segment in the associated machine language version (X₁ and X₂ respectively), the segments in the subsequent compiler passes each forming a respective undividable unit, and
- a linker-program (20) of the compiler/linker-program (19) stores segment information in respect of the segments of the program (Y₁ and Y₂ respectively) in question in an intermediate data file (Z₁ and Z₂ respectively), and
- the linker-program (20) during conversion of the source version (Q₂) of the second program (Y₂) into its machine language version (X₂)
- reads the segment information of the first program (Y₁) stored in a first intermediate data file (Z₁) and compares same to the segment information of the second program (Y₂) stored in a second intermediate data file (Z₂),
- stores the content of each segment which in the machine language version (X₂) of the second program (Y₂) requires at most the same storage demand as in that of the first program (Y₁), in both machine language versions (X₁, X₂) at a respectively identical address in the computer (8) of the central unit (6), and
- stores the content of each segment which in the machine language version (X₂) of the second program (Y₂) requires a greater storage demand than in that of the first program (Y₁),
- freeing the previously occupied storage region in favour of the content of one or more other segments, in a free storage region of the computer (8) of the central unit (6), and
- corrects reference specifications relating in other segments to the segment in question and sets them to the newest status,
- arranged downstream of the linker-program (20) is a comparator/generator-program (21) which
- compares together all bytes of the two machine language versions (X₁, X₂), and
- generates a differences program (δX) which only contains the bytes which are different for the two machine language versions (X₁, X₂), with addresses (a1, a2, a3, a4) associated therewith, and
- the differences program (δX) is passed to the computer (8) of the apparatus (1, 2, 3, 4 or 5) and its bytes are stored there at their associated addresses (a1, a2, a3, a4), wherein they together with the already present, unchanged bytes of the machine language version (X₁) of the first program (Y₁) of the apparatus (1, 2, 3, 4 or 5) form its machine language version (X₂) of the second program (Y₂).

2. A method according to claim 1 characterised in that the compiler-program (17) associates with each of the segments a definite segment name which is identical for both programs (Y₁, Y₂).

3. A method according to claim 1 or claim 2 characterised in that the items of segment information each contain at least a segment name, a start address of the segment in the physical store, a storage requirement of the segment, and a maximum possible size of the segment.

4. A method according to one of claims 1 to 3 characterised in that the compiler-program (17) assembles all segments of the program (Y₁ and Y₂ respectively) to be dealt with into sections and that in the computer (8) of the central unit (6) the linker-program (20) places the sections by means of a specification in a storage region.

5. A method according to claim 4 characterised in that the items of segment information each contain a section association of the segment.

## Revendications

1. Procédé pour transformer un libellé (X₁) en langage machine, mémorisé dans un ordinateur (8) d'un appareil (1, 2, 3, 4 ou 5), d'un premier programme (Y₁) en un libellé (X₂) en langage machine d'un second programme (Y₂) dérivé au moyen d'une modification du premier programme (Y₁), un premier ou second libellé d'origine associé (Q₁ ou Q₂) des deux programmes (Y₁, Y₂) étant converti, à des instants respectivement différents, dans un ordinateur (8) d'une unité centrale (6), à l'aide d'un programme "Compiler/Linker" (19) en le premier ou second libellé associé (X₁ ou X₂) en langage machine, caractérisé en ce
- qu'à l'instant de la conversion d'un libellé d'origine (Q₁ ou Q₂) en le libellé associé (X₁, X₂) en langage machine dans l'ordinateur (8) de l'unité centrale (6)
- un programme "Compiler" (17) du programme "Compiler/Linker" divise le libellé d'origine considéré (Q₁, Q₂) en des segments, qui sont en relation directe avec le contenu du libellé d'origine (Q₁ ou Q₂) et auxquelles correspondent des segments respectifs dans le libellé associé (X₁ ou X₂) en langage machine, les segments dans des cycles de "Compiler" suivants formant respectivement une unité indivisible,
- un programme "Linker" (20) du programme "Compiler/Linker" (19) mémorise des informations de segments concernant les segments du programme considéré (Y₁ ou Y₂), dans un fichier intermédiaire (Z₁ ou Z₂),
- que pendant la conversion du libellé d'origine (Q₂) du second programme (Y₂) en le libellé (X₂) en langage machine, le programme "Linker" (20)
- lit les informations de segments, mémorisées dans un premier fichier intermédiaire (Z₁), du premier programme (Y₁) et les compare aux informations de segments, mémorisées dans un second fichier intermédiaire (Z₂) du second programme (Y₂),
- mémorise dans les deux libellés (X₁, X₂) en langage machine le contenu de chaque segment, qui requiert, dans le libellé (X₂) en langage machine du second programme (Y₂), au maximum un volume de mémoire égal à celui du premier programme (Y₁), à une même adresse respective dans l'ordinateur (8) de l'unité centrale (6), et
- mémorise le contenu de chaque segment, qui, dans le libellé (X₂) en langage machine du second programme (Y₂), requiert une quantité plus importante de mémoire que dans le libellé en langage machine du premier programme (Y₁),
- moyennant la libération de la zone de mémoire jusqu'alors occupée en faveur du contenu d'un ou de plusieurs autres segments, dans une zone de mémoire libre de l'ordinateur (8) de l'unité centrale (6), et
- corrige des indications de référence, qui, dans d'autres segments, se rapportent au segment considéré, et les amène dans l'état le plus récent,
- qu'en aval du programme "Linker" (20) est disposé un programme de comparateur/générateur (21), qui
- compare entre eux tous les octets des deux libellés (X₁, X₂) en langage machine, et
- produit un programme de différences (δX), qui contient alors les octets, qui sont différents pour les deux libellés (X₁, X₂) en langage machine, avec les adresses (a1, a2, a3, a4) qui leur sont associées, et
- que le programme de différences (δX) est envoyé à l'ordinateur (8) de l'appareil (1, 2, 3, 4 ou 5) et que ses octets y sont mémorisés à leurs adresses associées (a1, a2, a3, a4), auquel cas ils forment conjointement avec les octets non modifiés, déjà présents, du libellé (X₁) en langage machine du premier programme (Y₁) de l'appareil (1, 2, 3, 4 ou 5), leur libellé (X₂) en langage machine du second programme (Y₂).

2. Procédé selon la revendication 1, caractérisé en ce que le programme "Compiler" (17) est associé à un nom sans ambiguïté du segment, qui est identique pour les deux programmes (Y₁, Y₂).

3. Procédé selon la revendication 1 ou 2, caractérisé en ce que les informations de segments contiennent respectivement au moins un nom de segment, une adresse de début du segment dans la mémoire physique, une quantité requise de mémoire du segment et une taille maximale possible du segment.

4. Procédé selon l'une des revendications 1 à 3, caractérisé en ce que le programme "Compiler" (17) rassemble tous les segments du programme existant (Y₁ ou Y₂) dans des sections et que le programme "Linker" dans l'ordinateur (8) de l'unité centrale (6) place les sections dans une zone de mémoire en référence à une spécification.

5. Procédé selon la revendication 4, caractérisé en ce que les informations de segments contiennent respectivement une appartenance du segment à une section.
